# EUROPEAN PATENT APPLICATION

(11) **EP 2 617 968 A1**
(43) Date of publication of application: **24.07.2013**
(21) Application number: 11824898.8
(22) Date of filing: 27.07.2011
(51) Int. Cl.: F02D 23/02, F02D 21/08, F02D 23/00, F02D 41/14, F02D 45/00

(54) **CONTROL UNIT FOR CONTROL MEMBER, PRESSURE CONTROL UNIT, EGR CONTROL UNIT, AND BOOST PRESSURE CONTROL UNIT**

(30) Priority: 17.09.2010 JP 2010209124
(71) Applicant: Bosch Corporation, Tokyo 150-8360 (JP)
(72) Inventor: FUKUSHIMA Naoyuki, Higashimatsuyama-shi Saitama 355-8603 (JP); ABE Makoto, Higashimatsuyama-shi Saitama 355-8603 (JP)
(74) Representative: Dreiss
(86) International application number: PCT/JP2011/067022
(87) International publication number: WO 2012/035889

(57) **Abstract**

[Problem]

To provide a control processing apparatus of a control member capable of always controlling a controlled state amount in a stable manner by learning a variance of apparent efficiency caused by operation control of the control member, a pressure control processing apparatus, an EGR control processing apparatus, and a supercharging pressure control processing apparatus.

[Means for Resolution]

A control processing apparatus of a control member configured so as to find a target control operation amount of the control member to control a predetermined controlled state amount to be a target controlled state amount on the basis of a sum of a feedback control amount and a pre-control amount includes pre-control amount correction means for correcting the pre-control amount in such a manner that a ratio of the feedback control amount to the sum of the feedback control amount and the pre-control amount in a stable state of the controlled state amount is maintained in a predetermined range.

## Description

### Technical Field

The present invention relates to a control processing apparatus of a control member, a pressure control processing apparatus, an EGR control processing apparatus, and a supercharging pressure control processing apparatus, equipped to a system to control an internal combustion engine. More particularly, the invention relates to a control processing apparatus of a control member, a pressure control processing apparatus, an EGR control processing apparatus, and a supercharging pressure control processing apparatus, configured so as to find a target control operation amount of the control member on the basis of a sum of a feedback control amount and a pre-control amount.

### Background Art

An accumulator fuel injection control apparatus has been used extensively as an apparatus used for fuel injection control of an internal combustion engine represented by a diesel engine. The accumulator fuel injection control apparatus chiefly includes a low pressure feed pump that supplies a high pressure pump with fuel in a fuel tank, the high pressure pump that pressure-feeds the fuel supplied from the low pressure feed pump by applying a pressure to the fuel, a common rail that accumulates the fuel pressure-fed from the high pressure pump, a plurality of fuel injectors that supply the fuel supplied from the common rail by injecting the fuel into cylinders of the internal combustion engine, and an ECU (Electronic Control Unit) that performs fuel injection control.

In the accumulator fuel injection control apparatus as above, a pressure of the common rail (hereinafter, referred to as the rail pressure) is a factor that directly relates to a fuel injection pressure and it is therefore crucial to control the rail pressure with accuracy in order to make combustion characteristics of the internal combustion engine satisfactory. The rail pressure is controlled by regulating a flow rate of fuel pressure-fed from the high pressure pump to the common rail (inlet control), by regulating a flow rate of fuel returned from the common rail to a low pressure side (outlet control), or further by using these types of flow rate control in combination.

A flow rate of fuel is regulated generally by an electromagnetic proportional metering valve and a target control operation amount of the metering valve is found by feedback control using a deviation between a target rail pressure and an actual rail pressure (see, for example, PTL 1).

When the feedback control of the metering valve is performed, in order to enhance responsivity of the rail pressure to the control of the metering valve, control is performed not only to determine the target control operation amount on the basis of a feedback control amount alone, but also to find the target control operation amount of the metering valve on the basis of a sum of a pre-control amount found from a predetermined pre-control map on the basis of a target fuel injection amount or the like and the feedback control amount (see, for example, PTL 2).

### Citation List

### Patent Literature

PTL 1: JP-A-2005-113704 (full text and all drawings)
PTL 2: WO2009/125807A1 (paragraph [0003] and Fig. 2)

### Summary of Invention

### Technical Problem

Incidentally, in the accumulator fuel injection control apparatus, a fluctuation or a variance of efficiency of the high pressure pump or the metering valve has an influence on the control performance of the rail pressure. The efficiency not only varies with an individual difference of the high pressure pump, the metering valve, and further respective constituent components of the control processing apparatus or the like, but can also fluctuate with a difference of types of used fuel, fuel temperatures, and the like.

For example, even in a case where the same constituent components are used, a fuel leakage amount from fine clearances present in a fuel pass-through passage varies with a fuel viscosity that differs when types of fuel or fuel temperatures are different and apparent pressure-feed efficiency of the high pressure pump fluctuates. More specifically, because the fuel leakage amount increases when fuel viscosity is low, apparent pressure-feed efficiency of the high pressure pump decreases. Hence, the rail pressure cannot be maintained unless the high pressure pump pressure-feeds more fuel. Conversely, because the fuel leakage amount decreases when fuel viscosity is high, apparent pressure-feed efficiency of the high pressure pump increases. Hence, the rail pressure readily increases and there is a risk in some cases that the rail pressure increases to the extent that stress is applied to parts of a high pressure system, such as the common rail.

The occurrence of a variance in apparent pressure-feed efficiency of the high pressure pump as above makes it impossible to control the rail pressure in a stable manner even when the metering valve is controlled by finding the target control operation amount in accordance with an operational expression set in advance of shipment of a product.

For example, in PTL 1 specified above, the target control operation amount of the metering valve is determined on the basis of a feedback control amount alone that is based on a deviation between the target rail pressure and the actual rail pressure. Accordingly, there is no other choice than to depend on a computation of the feedback control amount also for a fluctuation or a variance of the pressure-feed efficiency of the high pressure pump. Hence, responsivity of the rail pressure to the operation control of the metering valve may possibly become poor.

Also, in PTL 2 specified above, the target control operation amount of the metering valve is found on the basis of a sum of the feedback control amount and the pre-control amount with the aim of enhancing the responsivity. However, of the two amounts, the pre-control amount is not an amount that is found on the basis of a deviation between the target rail pressure and the actual rail pressure but it is a value that can be obtained from the pre-control map according to indicated injection amount and engine speed. In short, the pre-control amount is a value that cannot address a fluctuation or a variance of the apparent pressure-feed efficiency of the high pressure pump.

Accordingly, it turns out that there is no other choice than to depend on a computation of the feedback control amount for a fluctuation or a variance of the apparent pressure-feed efficiency of the high pressure pump. A ratio under the charge of the feedback control, however, readily changes with a fluctuation or a variance of the pressure-feed efficiency. Consequently, it may become difficult to control the rail pressure in a stable manner.

The problem as above can occur also in operation control of an EGR (Exhaust Gas Recirculation) valve in an EGR system in which a part of an exhaust gas of the internal combustion engine is circulated to an intake side and operation control of supercharging pressure regulation means in a supercharger (turbocharger) to control a supercharging pressure of the internal combustion engine. For example, efficiency of the EGR valve has an influence on the control performance of an intake amount of the internal combustion engine and efficiency of the supercharging pressure regulation means has an influence on the control performance of a supercharging pressure.

In view of the problem discussed above, the inventor of the invention completed the invention when he discovered that the problem can be solved by finding the target control operation amount of the control member on the basis of a sum of the feedback control amount and the pre-control amount and by correcting the pre-control amount in such a manner that a ratio of the feedback control amount to the sum in a stable state of a controlled state amount is maintained in a predetermined range. Accordingly, the invention has an object to provide a control processing apparatus of a control member capable of always controlling a controlled state amount in a stable manner while making responsivity of the controlled state amount satisfactory by learning a fluctuation or a variance of efficiency relating to operation control of the control member. Also, the invention has another object to provide a pressure control processing apparatus, an EGR control processing apparatus, and a supercharging pressure control processing apparatus formed as such a control processing apparatus.

### Solution to Problem

According to the invention, the problems described above can be solved by providing a control processing apparatus of a control member configured so as to find a target control operation amount of the control member to control a predetermined controlled state amount to be a target controlled state amount on the basis of a sum of a feedback control amount and a pre-control amount, and having: controlled state amount detection means for detecting the controlled state amount; target controlled state amount computation means for computing the target controlled state amount; feedback control amount computation means for computing the feedback control amount using a deviation between the target controlled state amount and the controlled state amount; pre-control amount computation means for finding the pre-control amount corresponding to a predetermined state amount; and target control operation amount computation means for finding the target control operation amount on the basis of the sum of the feedback control amount and the pre-control amount, the control processing apparatus of a control member being characterized by including: stable state detection means for detecting a stable state of the controlled state amount; and pre-control amount correction means for correcting the pre-control amount in such a manner that a ratio of the feedback control amount to the sum in the stable state is maintained in a predetermined range.

More specifically, according to the control processing apparatus of a control member of the invention, the pre-control amount is corrected according to a fluctuation or a variance of efficiency relating to operation control of the control member. Hence, even in a case where a fluctuation or a variance of efficiency occurs, it becomes possible to maintain a ratio under the charge of the feedback control in a predetermined range. It thus becomes possible to control the controlled state amount in a stable manner while making responsivity of the controlled state amount to the operation control of the control member satisfactory.

Also, when the control processing apparatus of a control member of the invention is formed, it is preferable that the pre-control amount correction means calculates a correction amount of the pre-control amount on the basis of a deviation between an actual value of the ratio of the pre-control amount and a target value of the ratio when the stable state is detected. By calculating the correction amount on the basis of a deviation of the ratio, it becomes possible to correct the pre-control amount according to a fluctuation or a variance of efficiency that is actually occurring.

Also, when the control processing apparatus of a control member of the invention is formed, it is preferable that the pre-control amount correction means increases or decreases the pre-control amount by a predetermined amount depending on a relation as to which one of an actual value of the ratio of the pre-control amount and a target value of the ratio is greater or smaller than the other. By increasing or decreasing the correction amount by a predetermined amount according to the larger-or-smaller relation of the ratio, the pre-control amount is corrected gradually according to a fluctuation or a variance of efficiency and it therefore becomes possible to lessen a load on the control processing apparatus.

Also, when the control processing apparatus of a control member of the invention is formed, it is preferable to include target ratio setting means for setting a target value of the ratio according to a predetermined state amount that is different at least from the controlled state amount. By setting the target value of the ratio according to a predetermined state amount, a target ratio of the pre-control amount is set according to the environmental condition under which the control member is currently placed, and it therefore becomes possible to maintain a ratio actually under the charge of the feedback control in a predetermined range independently of the environmental condition.

Also, when the control processing apparatus of a control member of the invention is formed, it is preferable that an initial value of the correction amount is set on the basis of an individual difference of a system to which the control member is equipped before shipment of the control processing apparatus of the control member. By setting the initial value of the correction amount on the basis of an individual difference of the system before shipment, the pre-control amount is corrected according to a variance caused by an individual difference of the system and it therefore becomes possible to control the controlled state amount in a stable manner while making responsivity of the controlled state amount satisfactory from the very beginning of use.

Also, another aspect of the invention is a pressure control processing apparatus configured so as to find a target control operation amount of a metering valve to control a pressure of a common rail provided to an accumulator fuel injection control apparatus used for control of fuel injection into a cylinder of an internal combustion engine on the basis of a sum of a feedback control amount and a pre-control amount, characterized by including: rail pressure detection means for detecting the pressure of the common rail; target rail pressure computation means for computing a target value of the pressure of the common rail; feedback control amount computation means for computing the feedback control amount using a deviation between the target value and the pressure of the common rail; pre-control amount computation means for finding the pre-control amount corresponding to a running condition of the internal combustion engine; target control operation amount computation means for finding the target control operation amount on the basis of the sum of the feedback control amount and the pre-control amount; stable state detection means for detecting a stable state of the pressure of the common rail; and pre-control amount correction means for correcting the pre-control amount in such a manner that a ratio of the feedback control amount to the sum in the stable state is maintained in a predetermined range.

More specifically, according to the pressure control processing apparatus of the invention, the pre-control amount making up a target control flow rate as a basis of the target control operation amount of the metering valve is corrected according to a fluctuation or a variance of apparent pressure-feed efficiency of a high pressure pump. Hence, even in a case where a fluctuation or a variance of the pressure-feed efficiency occurs, a ratio under the charge of the feedback control amount making up the target control flow rate can be maintained in a predetermined range. It thus becomes possible to perform rail pressure control in a stable manner while making responsivity of the rail pressure to the operation control of the metering valve satisfactory.

Still another aspect of the invention is an EGR control processing apparatus configured so as to find a target control operation amount of an EGR valve in an EGR apparatus that controls an EGR amount or an EGR rate of an internal combustion engine by returning a part of an exhaust gas of the internal combustion engine to an intake side on the basis of a sum of a feedback control amount and a pre-control amount, characterized by including: EGR value detection means for detecting the EGR amount or the EGR rate; target EGR value computation means for computing a target value of the EGR amount or the EGR rate; feedback control amount computation means for computing the feedback control amount using a deviation between the target value and the EGR amount or the EGR rate; pre-control amount computation means for finding the pre-control amount corresponding to a running condition of the internal combustion engine; target control operation amount computation means for finding the target control operation amount on the basis of the sum of the feedback control amount and the pre-control amount; stable state detection means for detecting a stable state of the EGR amount or the EGR rate; and pre-control amount correction means for correcting the pre-control amount in such a manner that a ratio of the feedback control amount to the sum in the stable state is maintained in a predetermined range.

According to the EGR control processing apparatus of the invention, the pre-control amount making up the control operation amount of the EGR valve is corrected according to a fluctuation or a variance of efficiency of the EGR valve. Hence, even in a case where a fluctuation or a variance of efficiency of the EGR valve occurs, a ratio under the charge of the feedback control can be maintained in a predetermined range. It thus becomes possible to control the EGR amount or the EGR rate in a stable manner while making responsivity of the EGR amount or the EGR rate to the operation control of the EGR valve satisfactory.

Further, still another aspect of the invention is a supercharging pressure control processing apparatus configured so as to find a target control operation amount of supercharging pressure regulation means in a supercharger to control a supercharging pressure of an internal combustion engine on the basis of a sum of a feedback control amount and a pre-control amount, characterized by including: supercharging pressure detection means for detecting the supercharging pressure; target supercharging pressure computation means for computing a target value of the supercharging pressure; feedback control amount computation means for computing the feedback control amount using a deviation between the target value and the supercharging pressure; pre-control amount computation means for finding the pre-control amount corresponding to a running condition of the internal combustion engine; target control operation amount computation means for finding the target control operation amount on the basis of the sum of the feedback control amount and the pre-control amount; stable state detection means for detecting a stable state of the internal combustion engine; and pre-control amount correction means for correcting the pre-control amount in such a manner that a ratio of the feedback control amount to the sum in the stable state is maintained in a predetermined range.

According to the supercharging pressure control processing apparatus of the invention, the pre-control amount making up the control operation amount of the supercharging pressure regulation means is corrected according to a fluctuation or a variance of efficiency of the supercharging pressure regulation means. Hence, even in a case where a fluctuation or a variance of efficiency of the supercharging pressure regulation means occurs, a ratio under the charge of the feedback control can be maintained. It thus becomes possible to control the supercharging pressure in a stable manner while making responsivity of the supercharging pressure to the operation control of the supercharging pressure regulation means satisfactory.

The term, "efficiency" of the control member or the constituent members, referred to herein means a ratio of a current amount of work to an amount of work (ideal amount of work) by the member of interest as a reference when an operational expression set in the control processing apparatus is set.

### Brief Description of Drawings

Fig. 1 is a view showing an example of an overall configuration of an accumulator fuel injection control apparatus provided with a control processing apparatus (pressure control processing apparatus) of a control member of a first embodiment.
Fig. 2 is a block diagram showing an example of a configuration of the pressure control processing apparatus of the first embodiment.
Fig. 3 is a view used to describe an example of a computation method of an energization amount of a metering valve subject to closed loop control.
Fig. 4 is a view used to describe an example of a correction method of a pre-control amount.
Fig. 5 is a flowchart depicting an example of a drive control method of the metering valve performed by the pressure control processing apparatus.
Fig. 6 is a flowchart depicting an example of a method of determining a stable state of a rail pressure.
Fig. 7 is a flowchart depicting an example of a correction method of the pre-control amount.
Fig. 8 is a view showing an example of an overall configuration of an EGR apparatus provided with a control processing apparatus (EGR control processing apparatus) of a control member of a second embodiment.
Fig. 9 is a block diagram showing an example of a configuration of the EGR control processing apparatus of the second embodiment.
Fig. 10 is a flowchart depicting an example of a drive control method of an EGR valve performed by the EGR control processing apparatus.
Fig. 11 is a flowchart depicting an example of a method of determining a stable state of an EGR value (EGR amount).
Fig. 12 is a flowchart depicting an example of a correction method of a pre-control amount.
Fig. 13 is a view showing an example of an overall configuration of a supercharger (turbocharger) provided with a control processing apparatus (supercharging pressure control processing apparatus) of a control member of a third embodiment.
Fig. 14 is a block diagram showing an example of a configuration of the supercharging pressure control processing apparatus of the third embodiment.
Fig. 15 is a flowchart depicting an example of a drive control method of supercharging pressure regulation means performed by the supercharging pressure control processing apparatus.
Fig. 16 is a flowchart depicting an example of a method of determining a stable state of a supercharging pressure. Fig. 17 is a flowchart depicting an example of a correction method of a pre-control amount.

### Description of Embodiments

Hereinafter, embodiments of a control processing apparatus of a control member, a pressure control processing apparatus, an EGR control processing apparatus, and a supercharging pressure control processing apparatus of the invention will be described specifically with reference to the drawings as needed. It should be appreciated, however, that the embodiments below show an aspect of the invention and have no intention to limit the invention and the embodiments can be modified arbitrarily within the scope of the invention. In the drawings, components labeled with the same reference numerals are the same components and a description of such components is omitted where appropriate.

### First Embodiment

A control processing apparatus of a control member according to a first embodiment of the invention is a pressure control processing apparatus equipped to an accumulator fuel injection control apparatus used for control of fuel injection into cylinders of an internal combustion engine and configured so as to perform rail pressure control by controlling an operation of a metering valve.

### 1. Overall Configuration of Accumulator Fuel Injection Control Apparatus

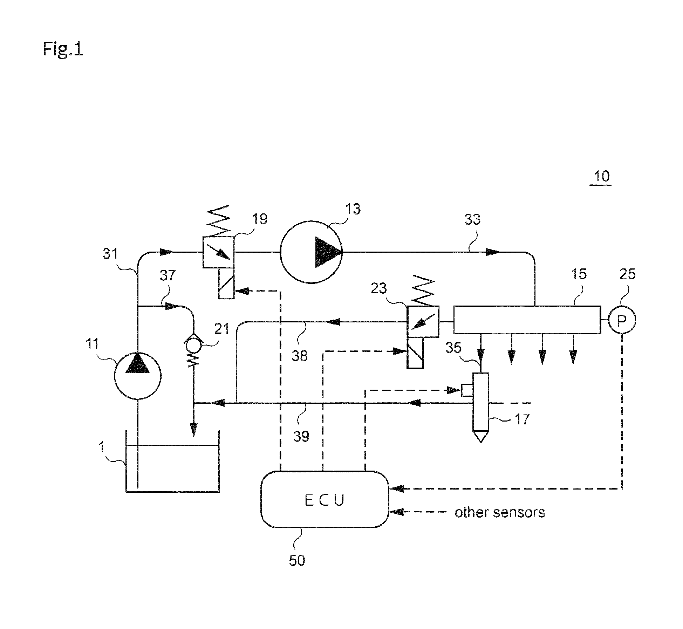

Fig. 1 schematically shows an overall configuration of an accumulator fuel injection control apparatus 10 having an ECU 50 as a pressure control processing apparatus of this embodiment. The accumulator fuel injection control apparatus 10 includes a low pressure feed pump 11 that supplies a high pressure pump 13 with fuel in a fuel tank 1, the high pressure pump 13 that pressure-feeds the fuel supplied from the low pressure feed pump 11 by applying a pressure to the fuel, a common rail 15 that accumulates the fuel pressure-fed from the high pressure pump 13, a plurality of fuel injectors 17 that supply the fuel supplied from the common rail 15 by injecting the fuel into cylinders of an unillustrated internal combustion engine, and the ECU 50 by which fuel injection control processing, rail pressure control processing, and the like are performed. The respective constituent components except for the ECU 50 are interconnected by fuel passages 31, 33, and 35.

The fuel passage 31 that connects the low pressure feed pump 11 and the high pressure pump 13 is provided with an inlet-side metering valve 19, so that a flow rate of fuel supplied to the high pressure pump 13 can be regulated. Also, a return passage 37 provided with an overflow valve 21 is connected to the fuel passage 31 at a point on a further upstream side of the inlet-side metering valve 19, so that surplus fuel is returned to the fuel tank 1.

Also, the common rail 15 is provided with a pressure sensor 25 and a return passage 38 provided with an outlet-side metering valve 23 is connected to the common rail 15, so that a flow rate of fuel returned from the common rail 15 to the fuel tank 1 can be regulated. Further, a return passage 39 through which back pressure fuel used for injection control and leakage fuel leaking from the fuel injectors 17 are returned to the fuel tank 1 is connected to the fuel injectors 17.

Energization of the inlet-side metering valve 19 and the outlet-side metering valve 23 is controlled by the ECU 50 and a valve opening is controlled in proportion to an energization amount, so that a flow rate of fuel allowed to pass through is regulated. In the accumulator fuel injection control apparatus 10, the rail pressure is controlled using the inlet-side metering valve 19 or the outlet-side metering valve 23 or by using these metering valves in combination in such a manner that an actual rail pressure Pact detected by the pressure sensor 25 coincides with a target rail pressure Ptarget. Whether the rail pressure is controlled using the inlet-side metering valve 19 or the outlet-side metering valve 23 or by using these metering valves in combination is assigned chiefly depending on a running condition of the internal combustion engine. It should be appreciated, however, that one of the inlet-side metering valve 19 and the outlet-side metering valve 23 may be omitted.

### 2. ECU (Pressure Control Processing Apparatus)

A specific configuration of the ECU 50 functioning as the pressure control processing apparatus of this embodiment will now be described.

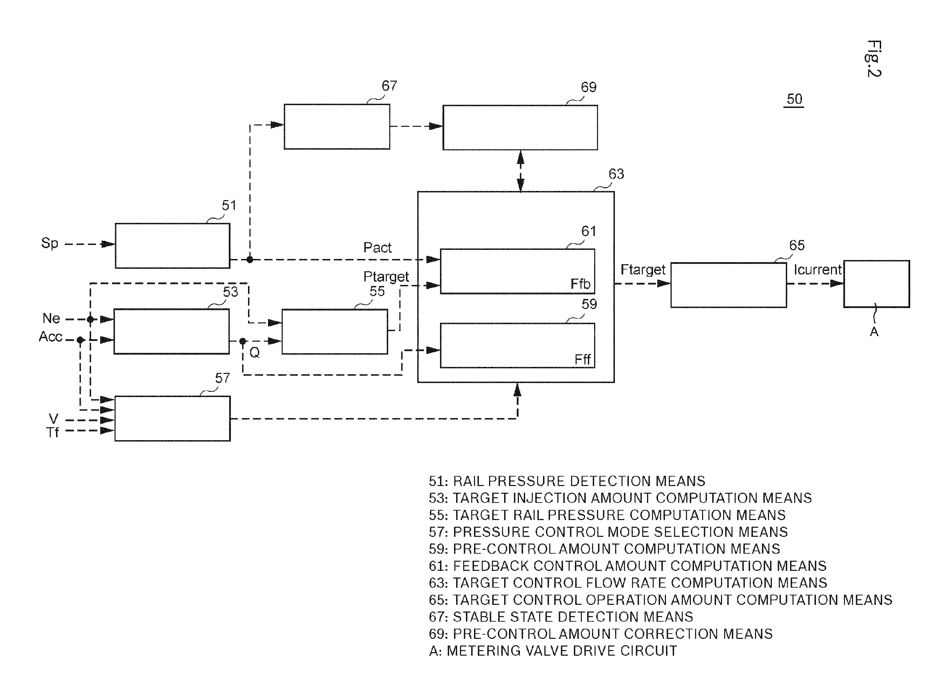

Fig. 2 shows a portion relating to rail pressure control in the configuration of the ECU 50 by functional blocks. The ECU 50 is mainly formed of a known micro-computer and includes rail pressure detection means 51, target injection amount computation means 53, target rail pressure computation means 55, pressure control mode selection means 57, target control flow rate computation means 63 formed of pre-control amount computation means 59 and feedback control amount computation means 61, target control operation amount computation means 65, stable state detection means 67, and pre-control amount correction means 69 as chief components. More specifically, the respective means are realized by running a program on the micro-computer.

Also, the ECU 50 includes unillustrated storage devices, such as a RAM (Random Access Memory) and a ROM (Read Only Memory), an unillustrated drive circuit used to pass a current to the inlet-side metering valve 19 and the outlet-side metering vale 23, an unillustrated drive circuit used to drive the fuel injectors 17, and the like. A control program and map information are pre-installed in the storage devices, or alternatively, computation results or the like by the respective means specified above are written into the storage devices. Further, in addition to a detection signal Sp of the pressure sensor 25, various detection signals of an engine speed Ne, an accelerator pedal position Acc, a vehicle speed V, a fuel temperature Tf, and the like are inputted into the ECU 50.

The rail pressure detection means 51 forms controlled state amount detection means of the invention and is configured so as to detect the actual rail pressure Pact on the basis of the detection signal Sp of the pressure sensor 25 provided to the common rail 15.

The target injection amount computation means 53 is configured so as to calculate a target fuel injection amount Q to be injected into cylinders of the internal combustion engine using an injection amount map on the basis of information on a running condition of the internal combustion engine, such as the engine speed Ne and the accelerator pedal position Acc.

The target rail pressure computation means 55 forms target controlled state amount computation means of the invention and is configured so as to calculate the target rail pressure Ptarget using a rail pressure map on the basis of the target fuel injection amount Q calculated in the target injection amount computation means 53 and the engine speed Ne.

The pressure control mode selection means 57 is configured so as to make a switching as to whether the rail pressure control is performed using the inlet-side metering valve 19 (inlet control), using the outlet-side metering valve 23 (outlet control), or using the inlet-side metering valve 19 and the outlet-side metering valve 23 in combination (inlet and outlet control) with the use of a control mode map on the basis of information on the accelerator pedal position Acc, the engine speed Ne, the vehicle speed V, the fuel temperature Tf, and the like.

In a case where the rail pressure control is performed by the inlet control, the outlet-side metering valve 23 is controlled by an open loop whereas the inlet-side metering valve 19 is controlled by a closed loop. In the inlet control, the outlet-side metering valve 23 is basically in a fully closed state and fuel is not discharged from the common rail 15. Hence, the rail pressure control by the outlet-side metering valve 23 is not substantially performed. Meanwhile, a valve opening of the inlet-side metering valve 19 is controlled according to a deviation ΔP between the target rail pressure Ptarget and the actual rail pressure Pact. Consequently, a flow rate of fuel pressure-fed from the high pressure pump 13 to the common rail 15 is regulated and the rail pressure is controlled.

Also, in a case where the rail pressure control is performed by the outlet control, the inlet-side metering valve 19 is controlled by an open loop whereas the outlet-side metering valve 23 is controlled by a closed loop. The inlet-side metering valve 19 is fully open or a valve opening thereof is determined according to the engine speed Ne or the like, so that a flow rate of fuel pressure-fed from the high pressure pump 13 to the common rail 15 is quantified. A flow rate of fuel pressure-fed to the common rail 15 in this instance is determined to be equal to or above a flow rate required to reach the target rail pressure Ptarget. Then, a valve opening of the outlet-side metering valve 23 is controlled according to the deviation ΔP between the target rail pressure Ptarget and the actual rail pressure Pact. Consequently, a flow rate of fuel discharged from the common rail 15 is regulated and the rail pressure is controlled.

In a case where the rail pressure control is performed by the inlet and outlet control, both of the inlet-side metering valve 19 and the outlet-side metering valve 23 are controlled by a closed loop. In the inlet and outlet control, a valve opening of each of the inlet-side metering valve 19 and the outlet-side metering valve 23 is controlled according to the deviation ΔP between the target rail pressure Ptarget and the actual rail pressure Pact and the rail pressure is controlled as a flow rate of fuel pressure-fed from the high pressure pump 13 to the common rail 15 and a flow rate of fuel discharged from the common rail 15 are regulated to maintain balance.

In a case where the accumulator fuel injection control apparatus 10 is provided with only one of the inlet-side metering valve 19 and the outlet-side metering valve 23, the pressure control mode selection means 57 is omitted.

The pre-control amount computation means 59 making up the target control flow rate computation means 63 is configured so as to find a pre-control amount Fff of the metering valve subject to the closed loop control in a control mode selected by the pressure control mode selection means 57 using the pre-control map on the basis of the engine speed Ne and the target fuel injection amount Q calculated in the target injection amount computation means 53. The pre-control amount Fff is a flow rate of fuel allowed to pass through the metering valve on which the closed loop control is performed.

The pre-control map is determined by a simulation in consideration of a PID (Proportional-Integral-Derivative) constant in PID control described below and a variance of the rail pressure on the basis of the engine speed Ne and the target fuel injection amount Q. It should be noted, however, that each pre-control amount Fff is set to a value slightly less than a required flow rate of fuel found by the simulation. The reason why the pre-control amount Fff is set to a value slightly less than the required flow rate of fuel is because a shortage is compensated for by the PID control.

In this embodiment, it is configured in such a manner that the pre-control amount Fff is found as the predetermined state amount on the basis of the engine speed Ne and the target fuel injection amount Q. It should be appreciated, however, that the pre-control amount Fff may be found on the basis of the target fuel injection amount Q alone or the pre-control amount Fff may be found on the basis of other types of information indicating a running condition of the internal combustion engine, such as the accelerator pedal position Acc.

Also, the feedback control amount computation means 61 making up the target control flow rate computation means 63 is configured so as to calculate a feedback control amount Ffb of the metering valve subject to the closed loop control in a control mode selected by the pressure control mode selection means 57 by performing a PID (Proportional-Integral-Derivative) operation in such a manner that the deviation ΔP between the target rail pressure Ptarget calculated in the target rail pressure computation means 55 and the actual rail pressure Pact detected by the rail pressure detection means 51 becomes zero

In the target control flow rate computation means 63, by adding the feedback control amount Ffb to the pre-control amount Fff, it becomes possible to obtain a target control flow rate Ftarget in which a flow rate of fuel that becomes short with the value of the pre-control amount Fff alone is compensated for. It should be noted, however, that in the case of the ECU 50 of this embodiment, the target control flow rate Ftarget is found in a state where the pre-control amount is corrected by pre-control amount correction means 69 described below.

The target control operation amount computation means 65 is configured so as to find an energization amount Icurrent of the metering valve subject to the closed loop control using a flow rate-to-current characteristic map on the basis of the calculated target control flow rate Ftarget and then to output an energization instruction to the drive circuit of the metering valve.

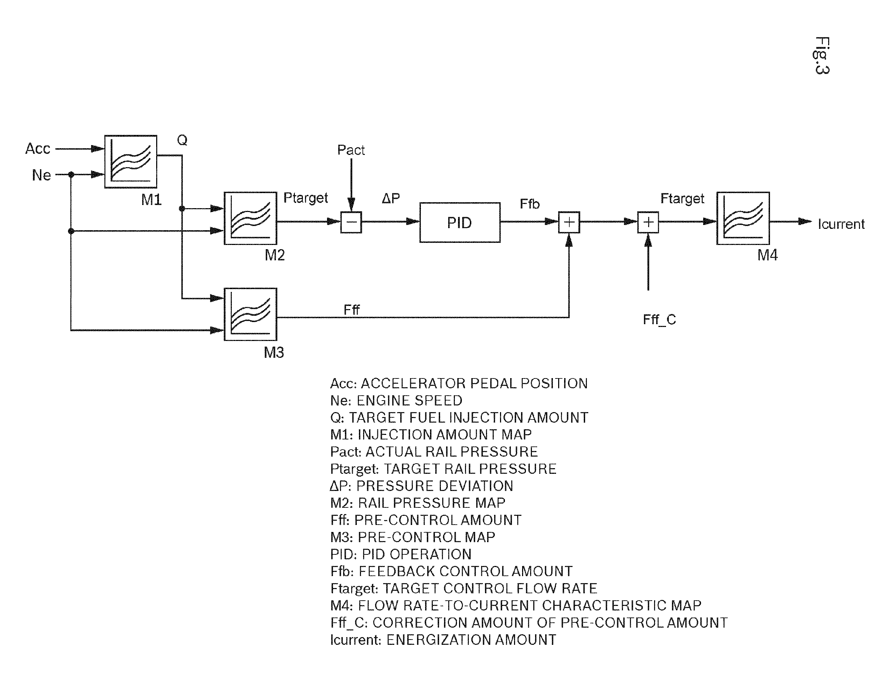

Fig. 3 shows an example of a computation method of the energization amount Icurrent of the metering valve subject to the closed loop control. By the example of Fig. 3, not only the target control flow rate Ftarget is calculated by adding a correction amount of the pre-control amount, Fff_C, to the feedback control amount Ffb and the pre-control amount Fff, but also the current amount Icurrent is found.

To describe more specifically, when the target fuel injection amount Q is found using the injection amount map on the basis of the accelerator pedal position Acc and the engine speed Ne, the target rail pressure Ptarget is found using the rail pressure map on the basis of the target fuel injection amount Q and the engine speed Ne. Then, the feedback control amount Ffb is found by a PID operation in such a manner that the deviation ΔP between the found target rail pressure Ptarget and the actual rail pressure Pact detected using the pressure sensor 25 becomes zero.

On the other hand, when the pre-control amount Fff is found using the pre-control map on the basis of the target fuel injection amount Q and the engine speed Ne, the pre-control amount Fff is added to the feedback control amount Ffb. The target control flow rate Ftarget is found by further adding the correction amount of the pre-control amount, Fff_C, described below to the sum value. When the target control flow rate Ftarget is found, the energization amount Icurrent of the metering valve is found using the flow rate-to-current characteristic map.

The ECU 50 of this embodiment is configured so as to learn the correction amount of the pre-control amount, Fff_C, using the pre-control amount correction means 69 while a stable state of the rail pressure is detected by the stable state detection means 67.

The stable state detection means 67 is configured so as to determine whether the actual rail pressure Pact detected by the rail pressure detection means 51 is in a stable state or not. A specific configuration is not particularly limited and it may be configured in such a manner that a stable state is determined, for example, when a predetermined time or more has elapsed while the deviation ΔP is within a predetermined range. Besides this configuration, it may be configured in such a manner that a stable state is determined when a predetermined time or more has elapsed while a difference between the last value and the current value of the actual rail pressure Pact or the target rail pressure Ptarget is equal to or smaller than a predetermined threshold value.

The pre-control amount correction means 69 is configured so as to maintain a ratio Rfb of the feedback control amount Ffb in a predetermined range by correcting the pre-control amount Fff in such a manner that a ratio Rff of the pre-control amount Fff to the current target control flow rate Ftarget coincides with a target ratio R1 while a stable state of the rail pressure is detected by the stable state detection means 67. While the rail pressure is in a stable state, the deviation ΔP changes in a stable manner. Hence, a fluctuation or a variance of the apparent pressure-feed efficiency of the high pressure pump 13 is compensated for by the correction amount Fff_C found in this instance.

More specifically, the target ratio R1 of the pre-control amount Fff to the target control flow rate Ftarget in the stable state of the rail pressure is set. The pre-control amount correction means 69 is configured so as to correct the pre-control amount Fff in a case where a value Fff_target found by multiplying the current target control flow rate Ftarget by the target ratio R1 is compared with the pre-control amount Fff and a difference ΔFff thus found is out of a predetermined range.

The target ratio R1 of the pre-control amount Fff in this instance is to set the ratio Rff under the charge of the pre-control amount Fff in the rail pressure control, in other words, to set a ratio under the charge of the feedback control in the rail pressure control. The target ratio R1 may be a fixed value or can be a variable value found using a map to suit a running condition of the internal combustion engine, such as the engine speed Ne and the target fuel injection amount Q, and the environmental condition, such as the fuel temperature Tf. By making the target ratio R1 variable, it becomes possible to maintain the ratio actually under the charge of the feedback control in a predetermined range independently of the environmental condition.

Regarding a correction method of the pre-control amount Fff, values of the pre-stored control map may be updated or a value found using the pre-control map may be multiplied by a coefficient corresponding to the correction amount. Alternatively, the correction amount Fff_C may be added to or subtracted from the pre-stored pre-control amount Fff. In a case where it is configured in such a manner that multiplication by a coefficient or addition or subtraction using a constant correction amount Fff_C is performed, there is no need to change the pre-stored map and a load on the ECU 50 is therefore lessened.

Alternatively, the pre-control amount Fff may be corrected at a time in such a manner that the ratio Rff of the pre-control amount Fff to the target control flow rate Ftarget coincides with the target ratio R1 or a predetermined amount may be added to or subtracted from the pre-control amount Fff each time a correction is made depending on a relation as to which of the current ratio Rff or the target ratio R1 is the higher or the lower. In a case where it is configured in such a manner that the predetermined amount is added to or subtracted from the pre-control amount Fff each time, a load of the computation processing on the ECU 50 is lessened.

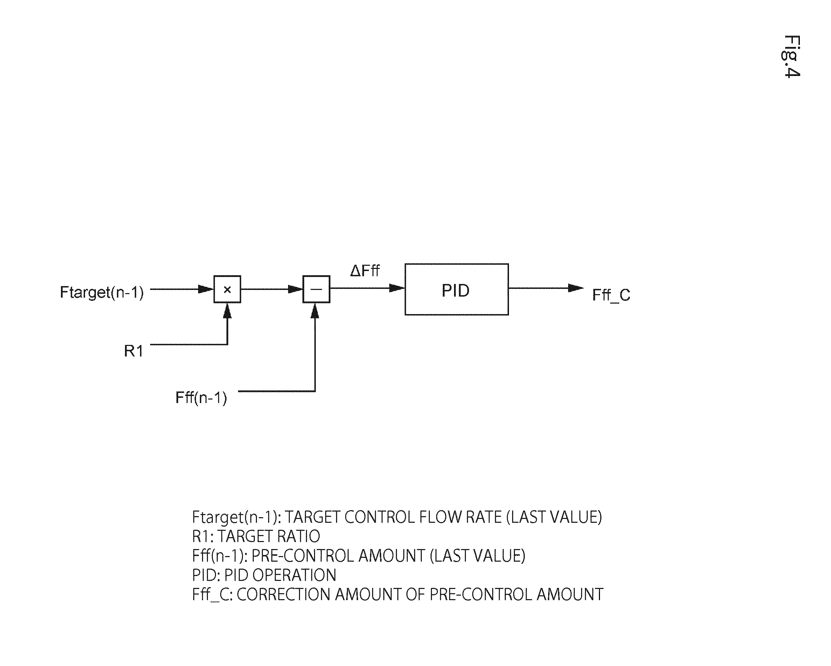

Herein, Fig. 4 shows a specific example of the correction method of the pre-control amount to show an example of a calculation method of the correction amount of the pre-control amount, Fff_C, in the computation method of the energization amount Icurrent shown in Fig. 3.
To describe more specifically, when a difference ΔFff between the value Fff_target found by multiplying the target control flow rate Ftarget found in the preceding computation by the target ratio R1 of the pre-control amount Fff and the pre-control amount Fff at this time, the correction amount of the pre-control amount, Fff_C, is calculated by a PID operation in such a manner that the difference ΔFff becomes zero.

The correction amount Fff_C is added when the target control flow rate Ftarget is found in the next and subsequent computations of the energization amount Icurrent. Hence, the feedback control amount Ffb is maintained at the ratio same as before. It thus becomes possible to perform the rail pressure control in a stable manner.

### 3. Specific Example of Flowchart

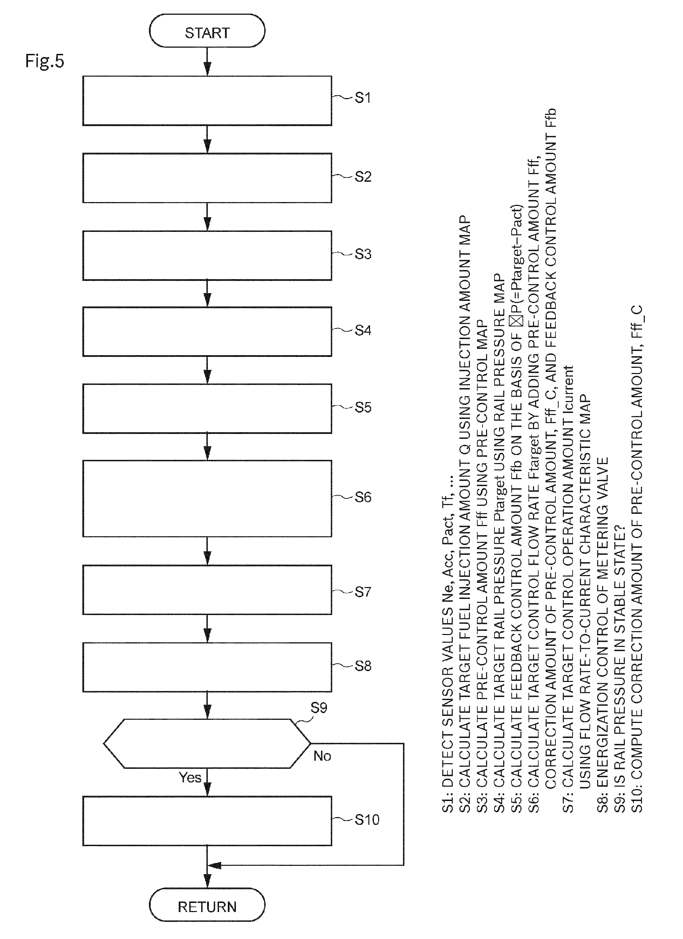

An example of a drive control method (pressure control method) of the metering valve performed by the ECU 50 as the pressure control processing apparatus of this embodiment will now be described in accordance with flowcharts of Fig. 5 through Fig. 7.

Firstly, referring to the flowchart of Fig. 5, in Step S1, the ECU 50 detects the engine speed Ne, the accelerator pedal position Acc, the actual rail pressure Pact, the fuel temperature Tf, and the like on the basis of detection signals of the various sensors. Subsequently, in Step S2, the ECU 50 calculates the target fuel injection amount Q using the injection amount map on the basis of the engine speed Ne, the accelerator pedal position Acc, and the like.

Subsequently, in Step S3, the ECU 50 calculates the pre-control amount Fff using the pre-control map on the basis of information on the engine speed Ne, the target fuel injection amount Q, and the like. Further, in Step S4, the ECU 50 calculates the target rail pressure Ptarget using the rail pressure map on the basis of the engine speed Ne, the target fuel injection amount Q, and the like. Then, in Step S5, the ECU 50 calculates the feedback control amount Ffb by performing a PID operation in such a manner that the deviation ΔP between the target rail pressure Ptarget and the actual rail pressure Pact becomes zero.

Subsequently, in Step S6, the ECU 50 calculates the target control flow rate Ftarget of fuel allowed to pass through the metering valve by adding the calculated pre-control amount Fff and feedback control amount Ffb and further the correction amount of the pre-control amount, Fff_C, currently set. An initial value of the correction amount Fff_C at this point may be zero or set to a value corresponding to a variance caused by an individual difference before shipment of the accumulator fuel injection control apparatus 10.

Thereafter, in Step S7, the ECU 50 calculates the target control operation amount Icurrent of the metering valve using the flow rate-to-current characteristic map on the basis of the target control flow rate Ftarget. Then, in Step S8, the ECU 50 performs energization control of the metering valve by instructing the drive circuit of the metering value to pass a current.

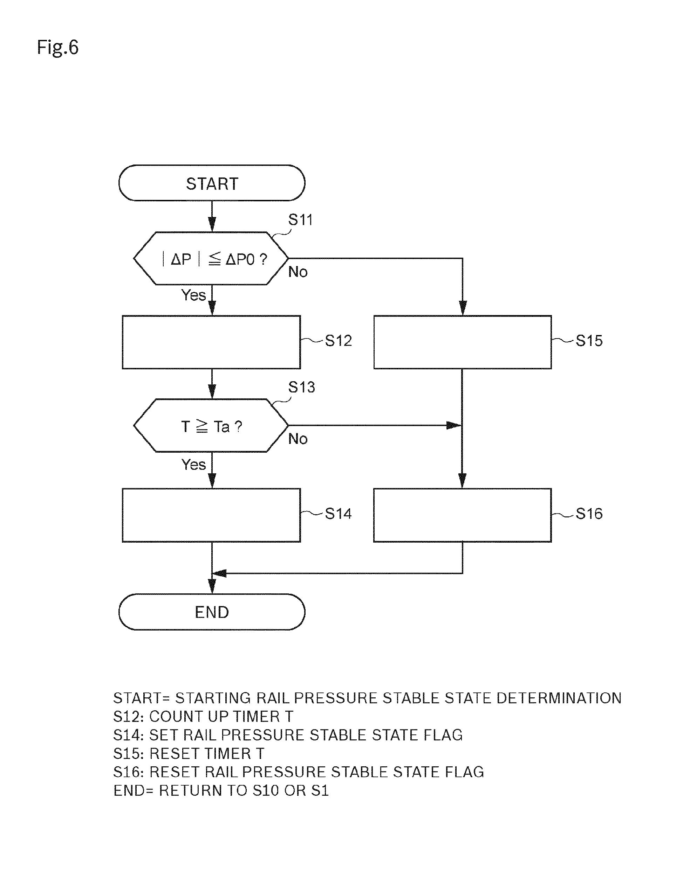

As the energization control of the metering valve is performed by Step 1 through Step 8 described thus far, the ECU 50 then determines whether the rail pressure is in a stable state or not in Step S9. Fig. 6 shows an example of a flowchart in accordance which whether the rail pressure is in a stable state or not is determined.

In the example of Fig. 6, in Step S11, the ECU 50 determines whether an absolute value of the deviation ΔP found in Step S5 is within a pre-set predetermined threshold value ΔP0 or not. In a case where the absolute value of the deviation ΔP is within the threshold value ΔP0, the ECU 50 proceeds to Step S12 in which the ECU 50 counts up a timer T. Then, in Step S13, the ECU 50 determines whether a value of the timer T has reached a pre-set predetermined threshold value Ta or not.

Because the rail pressure is determined as being in a stable state when the value of the timer T has reached the threshold value Ta, the ECU 50 sets a flag in Step S14 and ends the flow of the stable state determination. On the other hand, because the rail pressure cannot be determined as being in a stable state unless the value of the timer T has reached the threshold value Ta, the ECU 50 resets the flag in Step S16 and ends the flow of the stable state determination.

Also, in a case where the absolute value of the deviation ΔP exceeds the threshold value ΔP0 in Step S11, the rail pressure cannot be determined as being in a stable state, either. Accordingly, the ECU 50 proceeds to Step S15 and resets the timer T. Then, in Step S16, the ECU 50 resets the flag and ends the flow of the stable state determination.

The flowchart of Fig. 6 is the one in accordance with which a stable state of the rail pressure is determined on the basis of the deviation ΔP. However, as described above, it is also possible to determine a stable state of the rail pressure on the basis of the actual rail pressure Pact and the target rail pressure Ptarget.

Referring to Fig. 5 again, in a case where the rail pressure is determined as not being in a stable state in Step S9, the ECU 50 ends this routine and returns to Step S1. In a case where the rail pressure is determined as being in a stable state in Step S9, the ECU 50 proceeds to Step S10 and computes the correction amount of the pre-control amount, Fff_C.

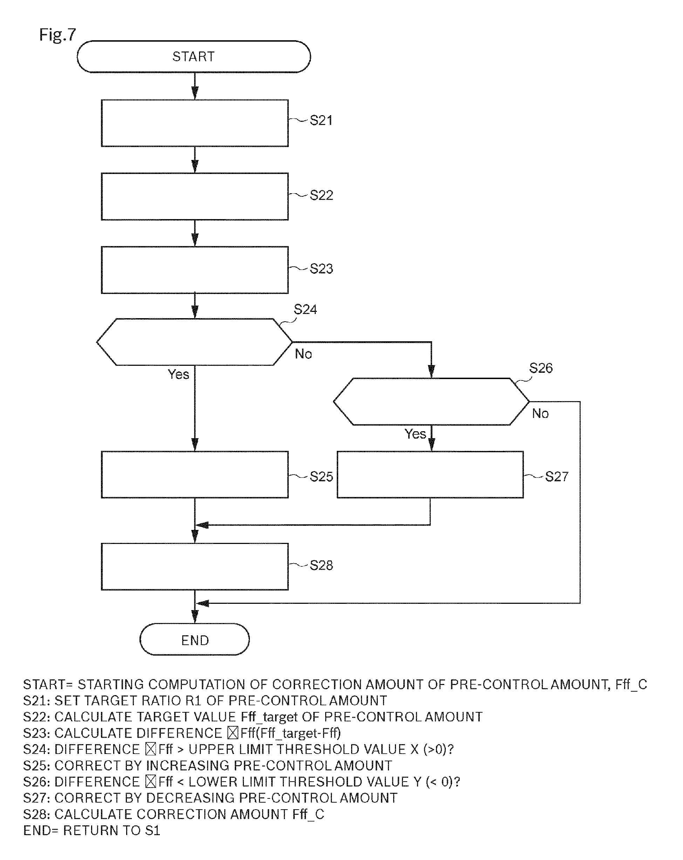

Fig. 7 shows an example of a flowchart in accordance with which the correction amount of the pre-control amount, Fff_C, is calculated.
In the example of Fig. 7, in Step S21, the ECU 50 sets the target ratio R1 of the pre-control amount Fff to the target control flow rate Ftarget according to a running condition of the internal combustion engine and the environmental condition. Subsequently, in Step S22, the ECU 50 calculates the target value of the pre-control amount, Fff_target, by multiplying the target control flow rate Ftarget calculated in Step S6 by the target ratio R1.

Subsequently, in Step S23, the ECU 50 finds the difference ΔFff by subtracting the pre-control amount Fff found in Step S3 from the target value Fff_target. Then, in Step S24, the ECU 50 determines whether the difference ΔFff exceeds a pre-set upper limit threshold value X or not. The upper limit threshold value X is a positive value. In a case where the difference ΔFff is found to exceed the upper limit threshold value X, the ECU 50 determines a need of correction by increasing the pre-control amount Fff in Step S25.

On the contrary, in a case where the difference ΔFff is found to be equal to or below the upper limit threshold value X, then in Step S26, the ECU 50 determines whether the difference ΔFff is below a lower limit threshold value Y or not. The lower limit threshold value Y is a negative value. In a case where the difference ΔFff is found to be below the lower limit threshold value Y, the ECU 50 determines a need of correction by decreasing the pre-control amount Fff in Step S27.

When the ECU 50 determines a need to increase or decrease the pre-control amount Fff and proceeds to Step S28, the ECU 50 calculates the correction amount Fff_C and also updates the setting of the current correction amount Fff_C, after which the ECU 50 ends the flow of correction amount computation. The correction amount Fff_C can be calculated using a map or calculated by performing a PID operation in such a manner that the difference ΔFff becomes zero. Alternatively, a predetermined amount that is added or subtracted to meet the need of an increase or a decrease may be set as a fixed value.

On the contrary, in a case where the difference ΔFff is found to be equal to or above the lower limit threshold value Y in Step S26, because the ratio Rff of the pre-control amount Fff to the target control flow rate Ftarget is within the predetermined range, the ECU 50 ends the flow of the correction amount computation without updating the correction amount of the pre-control amount, Fff_C.

According to the pressure control processing apparatus (ECU) 50 of this embodiment described above, not only the target control operation amount of the metering valve to regulate the rail pressure is found on the basis of a sum of the pre-control amount and the feedback control amount, but also a ratio under the charge of the feedback control is always maintained constant by correcting the pre-control amount Fff according to a fluctuation or a variance of the apparent pressure-feed efficiency of the high pressure pump 13 caused by an individual difference or deterioration with time of the respective constituent members forming the accumulator fuel injection control apparatus 10. It thus becomes possible to perform the rail pressure control in a stable manner while making responsivity of the rail pressure to the operation control of the metering valve satisfactory.

Also, according to the pressure control processing apparatus 50 of this embodiment, the correction amount of the pre-control amount, Fff_C, is calculated by a PID operation in such a manner that the ratio Rff of the pre-control amount Fff to the target control flow rate Ftarget of the metering valve coincides with the target ratio R1. It thus becomes possible to correct the pre-control amount Fff according to an actual fluctuation or variance of the apparent pressure-feed efficiency of the high pressure pump 13. Hence, the rail pressure control can be performed in a more stable manner.

### Second Embodiment

A control apparatus of a control member according to a second embodiment of the invention is an EGR control processing apparatus equipped to an EGR apparatus that controls an intake air amount of an internal combustion engine and configured so as to perform operation control of an EGR valve.

### 1. Overall Configuration of EGR Apparatus

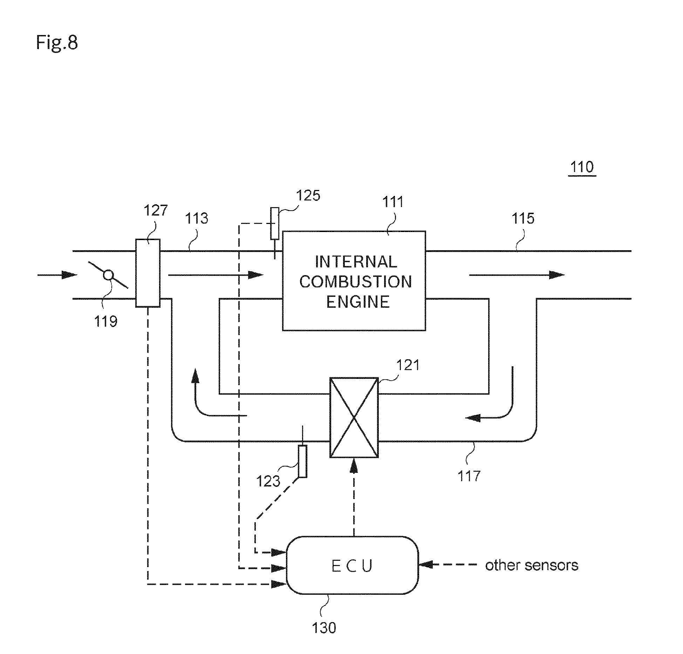

Fig. 8 schematically shows an overall configuration of an EGR apparatus 110 provided with an ECU 130 as the EGR control processing apparatus of this embodiment.
The EGR control apparatus 110 includes an exhaust gas circulation passageway 117 that connects a downstream side of a throttle valve 119 and an air flow meter 127 provided to an intake air passageway 113 of an internal combustion engine 111 to an exhaust gas passageway 115, an EGR valve 121 provided at a midpoint of the exhaust gas circulation passageway 117, and the ECU 130 by which exhaust gas circulation control is performed.

The EGR apparatus 110 flows back a part of an exhaust gas toward an intake side according to an opening of the EGR valve 121 so that a mixed gas of new air and the exhaust gas is taken into cylinders of the internal combustion engine 111. A fuel injection amount and a fuel injection timing of the internal combustion engine 111 are controlled according to a running condition thereof, so that control is performed to make air-fuel ratio of the internal combustion engine 111 coincide with a desired air-fuel ratio. Also, an opening of the EGR valve 121 is controlled in a predetermined running region as a target value of an EGR amount or an EGR rate, Etarget, is set by the EGR apparatus 110, for example, on the basis of the engine speed Ne and the target fuel injection amount Q.

In the EGR apparatus 110, a flow rate sensor 123 to detect an actual EGR amount Fegr_act is provided to the exhaust gas circulation passageway 117 on a side closer to the intake side than the EGR valve 121 and a flow rate sensor 125 to detect an actual intake amount Fin_act to the internal combustion engine 111 is provided to the intake air passageway 113 on a side closer to the downstream side than the connected point to the exhaust gas circulation passageway 117. Instead of providing these flow rate sensors, the actual EGR amount Fegr_act and the actual intake amount Fin_act may be found by a computation by the ECU 130.

In this embodiment, the EGR valve 121 is configured in such a manner that an opening of the EGR valve 121 is determined according to a lift amount of a valve body. It should be appreciated, however, that the configuration of the EGR valve 121 is not particularly limited.

### 2. ECU (EGR Control Processing Apparatus)

A specific configuration of the ECU 130 functioning as the EGR control processing apparatus of this embodiment will now be described.

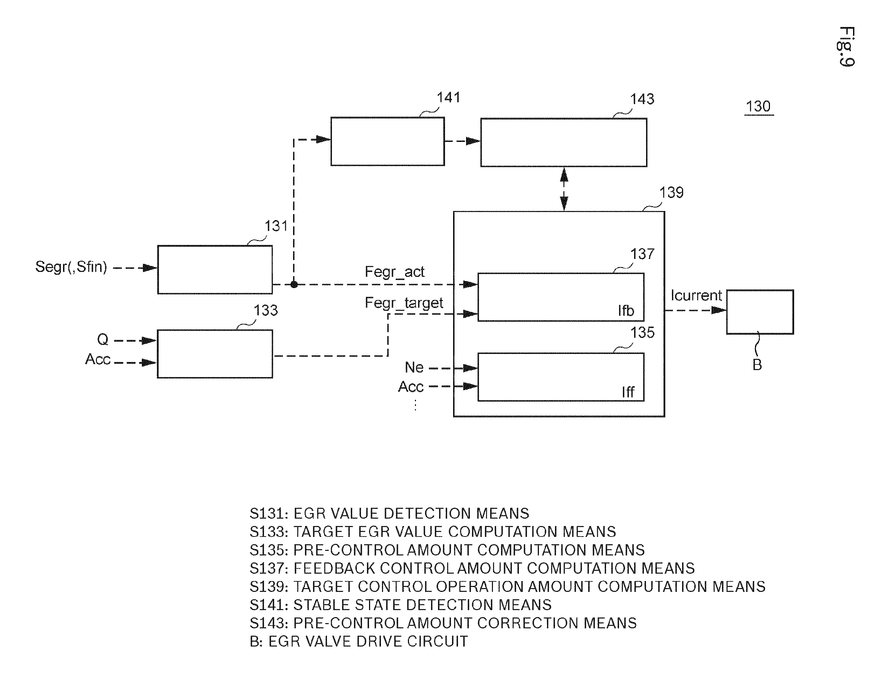

Fig. 9 shows a portion relating to exhaust gas circulation control in the configuration of the ECU 130 by functional blocks. The ECU 130 is mainly formed of a known micro-computer and includes EGR value detection means 131, target EGR value computation means 133, target control operation amount computation means 139 formed of pre-control amount computation means 135 and feedback control amount computation means 137, stable state detection means 141, and pre-control amount correction means 143 as chief components. More specifically, the respective means are realized by running a program on the micro-computer.

As with the ECU 50 of the first embodiment above, the ECU 130 is provided with unillustrated memory devices, such as a RAM and a ROM, an unillustrated drive circuit to pass a current to the EGR valve 121, and the like. Also, detection signals of various sensors including the flow rate sensors 123 and 125 and the air flow meter 127 described above are inputted into the ECU 130.

The EGR value detection means 131 forms the controlled state amount detection means of the invention and is configured so as to detect the actual EGR amount Fegr_act on the basis of a detection signal Segr of the flow rate sensor 123 or so as to detect an actual EGR ratio (a ratio of the actual EGR amount Fegr_act to the actual intake amount Fin_act to the internal combustion engine 111) Eact on the basis of detection signals Segr and Sfin of the flow rate sensors 123 and 125, respectively. In a case where the flow rate sensors 123 and 125 are not provided, the EGR value detection means 131 is configured so as to find the actual EGR amount Fegr_act or the actual EGR rate Eact by computation.

The target EGR value computation means 133 forms the target controlled state amount computation means of the invention and is configured so as to find a target EGR amount Fegr_target or a target EGR rate Etarget using an EGR map on the basis of information on a running condition of the internal combustion engine 111, such as the target fuel injection amount Q and the engine speed Ne of the internal combustion engine 111. The EGR map is a map that shows a relation of the target fuel injection amount Q and the engine speed Ne with respect to the target EGR amount Fegr_target or the target EGR rate Etarget and preliminarily set on the basis of experiments or the like. It should be noted that the target fuel injection amount Q is understood on the basis of the engine speed Ne, the accelerator pedal position Acc, and the like.

The pre-control amount computation means 135 making up the target control operation amount computation means 139 is configured so as to find a pre-control amount (energization amount) Iff of the EGR valve 121 using a pre-control map on the basis of a running condition of the internal combustion engine 111 as a predetermined state amount, such as the engine speed Ne and the accelerator pedal position Acc. The pre-control map is determined by a simulation in consideration of a PID (Proportional-Integral-Derivative) constant in PID control described below and a variance of the EGR amount or the EGR rate on the basis of the engine speed Ne, the accelerator pedal position Acc, and the like. Each pre-control amount Iff is set to a value slightly less than an energization amount for the target opening obtained by the simulation. The reason why the pre-control amount Iff is set to a value slightly less than the energization amount for the target opening is because a shortage is compensated for by the PID control.

Also, the feedback control amount computation means 137 making up the target control operation amount computation means 139 is configured so as to calculate a feedback control amount (energization amount) Ifb of the EGR valve 121 by performing a PID (Proportional-Integral-Derivative) operation in such a manner that a deviation ΔFegr or ΔE between the target EGR amount Fegr_target or the target EGR rate Etarget calculated in the target EGR value computation means 133 and the actual EGR amount Fegr_act or the actual EGR rate Eact detected by the EGR value detection means 131, respectively, becomes zero.

In the target control operation amount computation means 139, by adding the feedback control amount Ifb to the pre-control amount Iff, it becomes possible to obtain the target control operation amount Icurrent in which the EGR amount or the EGR rate that becomes short with a value of the pre-control amount Iff alone is compensated for. It should be noted, however, that in the case of the ECU 130 of this embodiment, the target control operation amount Icurrent is found in a state where the pre-control amount is corrected by the pre-control amount correction means 143 described below. The target control operation amount computation means 139 is configured so as to output an energization instruction to a drive circuit of the EGR valve on the basis of the calculated target control operation amount Icurrent.

Herein, the ECU 130 of this embodiment is configured so as to learn a correction amount of the pre-control amount, Iff_C using the pre-control amount correction means 143 while a stable state of the EGR amount or the EGR rate is detected by the stable state detection means 141.

The stable state detection means 141 is configured so as to determine whether the EGR amount or the EGR rate is in a stable state or not. A specific configuration is not particularly limited and it may be configured in such a manner that a stable state is determined, for example, when a predetermined time or more has elapsed while the deviation of the EGR amount, ΔFegr, or the deviation of the EGR rate, ΔE, is within a predetermined range. Besides this configuration, it may be configured in such a manner that a stable state is determined when a predetermined time or more has elapsed while a difference between the last value and the current value of the actual EGR amounts Fegr_act or the actual EGR rate Eact or between the last value and the current value of the target EGR amount Fegr_target or the target EGR rate Etarget is equal to or smaller than a predetermined threshold value.

The pre-control amount correction means 143 is configured so as to maintain a ratio Rfb of the feedback control amount Ifb in a predetermined range by correcting the pre-control amount Iff in such a manner that a ratio Rff of the pre-control amount Iff to the current target control operation amount Icurrent coincides with a target ratio R1 while a stable state of the EGR amount or the EGR rate is detected by the stable state detection means 141. While the EGR amount or the EGR rate is in a stable state, the deviation of the EGR amount, ΔFegr, or the deviation of the EGR rate, ΔE, changes in a stable manner. Hence, a fluctuation or a variance of apparent efficiency of the EGR valve 121 is compensated for by the correction amount Iff_C found in this instance. A specific configuration of the pre-control amount correction means 143 can be the same as that of the pre-control amount correction means 69 in the first embodiment above and a detailed description is omitted herein.

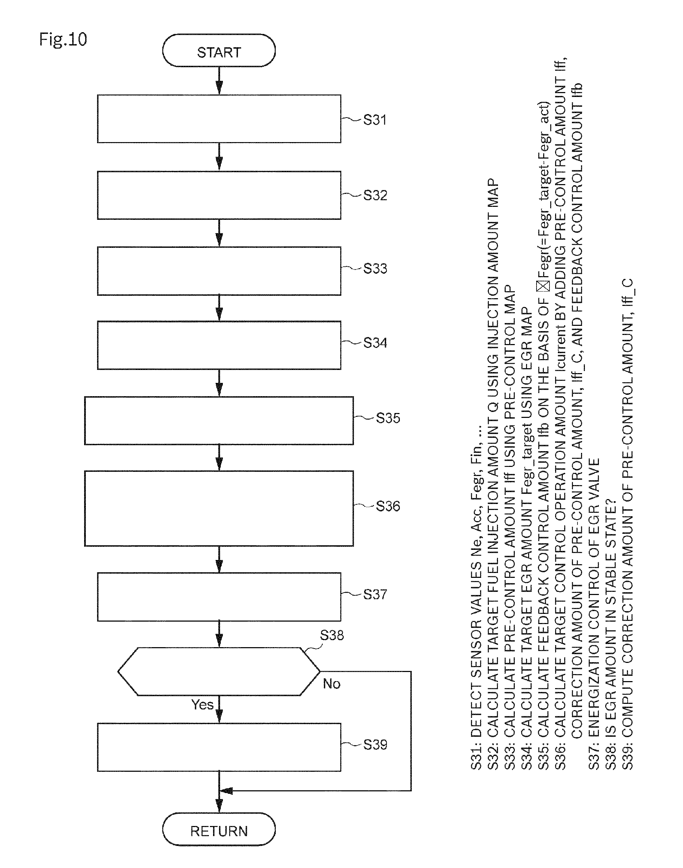

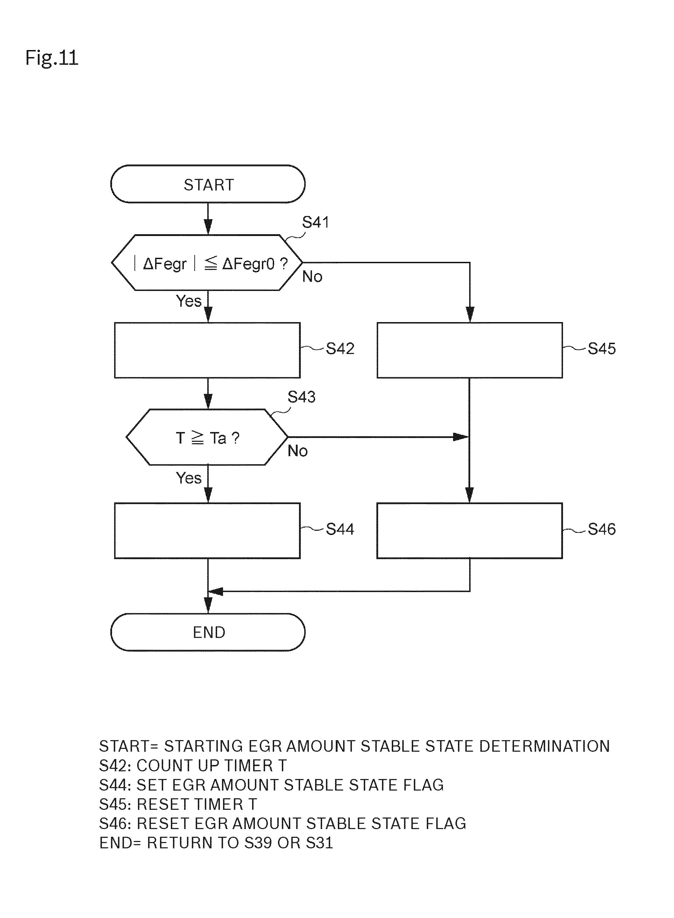

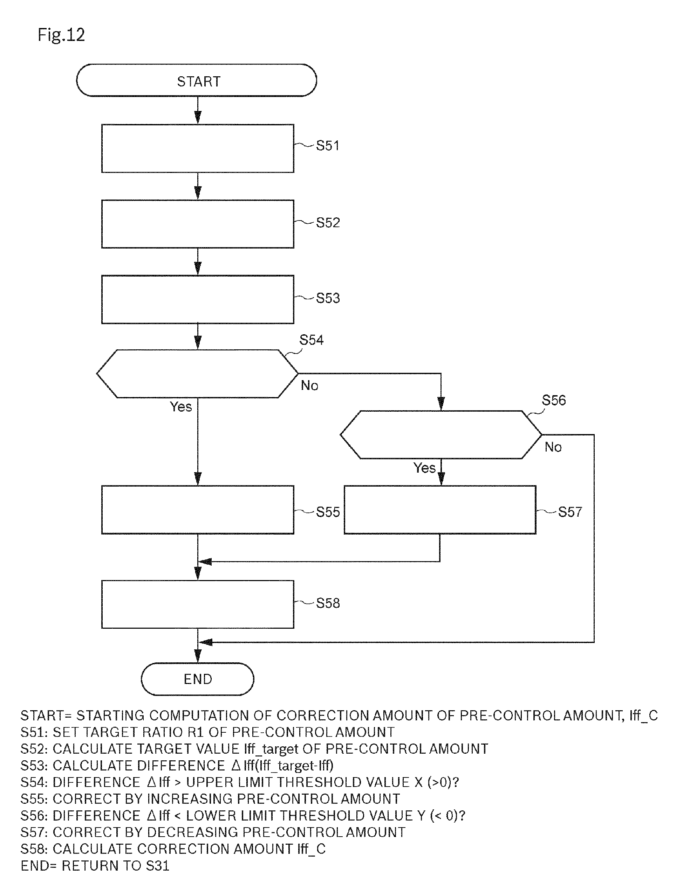

Fig. 10 through Fig. 12 are flowcharts depicting an example of a drive control method (EGR control method) of the EGR valve 121 performed by the ECU 130 of this embodiment. In the example of the flowcharts, the EGR amount is used as the EGR value.

Basically, the drive control method of the EGR valve 121 depicted in the flowcharts of Fig. 10 through Fig. 12 can be carried out in accordance with the flowcharts of Fig. 5 through Fig. 7 in the first embodiment above. It should be noted, however, that because the energization amount Icurrent of the EGR valve 121 is found in Step S36 in the flowchart of Fig. 10, this flowchart is equivalent to the flowchart of Fig. 5 in which Step S7 is omitted.

According to the EGR control processing apparatus (ECU) 130 of this embodiment described above, not only the target control operation amount Icurrent of the EGR valve 121 to regulate the EGR amount or the EGR rate is found on the basis of a sum of the pre-control amount Iff and the feedback control amount Ifb, but also the ratio under the charge of the feedback control is always maintained constant because the pre-control amount Iff is corrected according to a fluctuation or a variance of the apparent efficiency of the EGR valve 121 caused by an individual difference and deterioration with time of the respective constituent members forming the EGR apparatus 110. It thus becomes possible to perform control of the EGR amount or the EGR rate in a stable manner while making responsivity of the EGR amount or the EGR rate to the operation control of the EGR valve 121 satisfactory.

Also, according to the EGR control processing apparatus 130 of this embodiment, the correction amount of the pre-control amount, Iff_C, is calculated by a PID operation in such a manner that the ratio Rff of the pre-control amount Iff to the target control operation amount Icurrent of the EGR valve 121 coincides with the target ratio R1. It thus becomes possible to correct the pre-control amount Iff according to an actual fluctuation or variance of the apparent efficiency of the EGR valve 121. Hence, the EGR amount or the EGR rate can be controlled in a more stable manner.

### Third Embodiment

A control apparatus of a control member according to a third embodiment of the invention is a supercharging pressure control processing apparatus configured so as to perform operation control of supercharging pressure regulation means in a supercharger to control a supercharging pressure of an internal combustion engine.

### 1. Overall Configuration of Supercharger (Turbocharger)

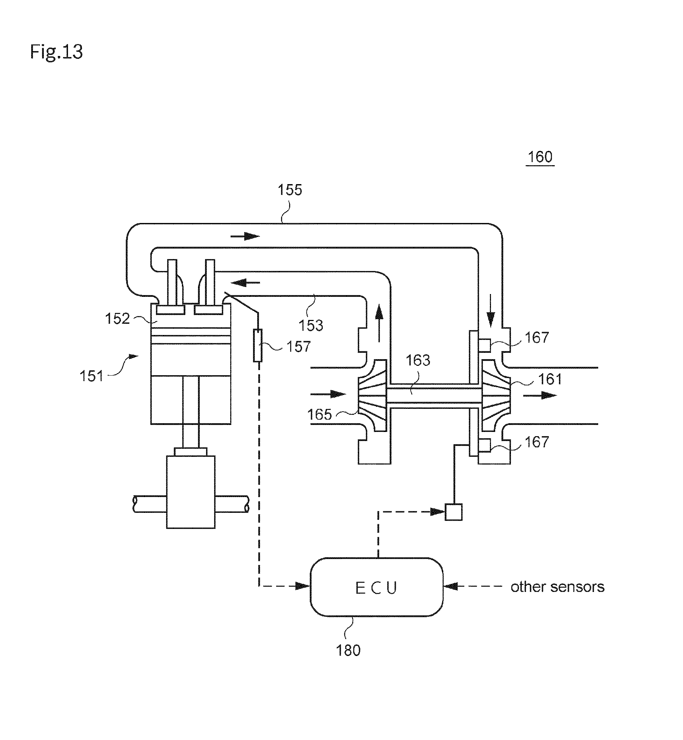

Fig. 13 schematically shows an overall configuration of a turbocharger 160 provided with an ECU 180 as a supercharging pressure control processing apparatus of this embodiment.
The turbocharger 160 includes a turbine wheel 161 rotated by an exhaust gas flowing through an exhaust gas passageway 155 of an internal combustion engine 151, a compressor wheel 165 disposed in an intake air passageway 153 and linked to the turbine wheel 161 via a rotor shaft 163 in an integrally rotatable manner, and the ECU 180 by which supercharging pressure control is performed.

In the turbocharger 160, the turbine wheel 161 rotates as an exhaust gas is blown to the turbine wheel 161. This rotation is transmitted to the compressor wheel 165 via the rotor shaft 163. Consequently, in the internal combustion engine 151, not only air is taken into a cylinder 152 due to a negative pressure generated inside the cylinder 152 in association with a movement of a piston, but also the air is forced into the cylinder 152 by a rotation of the compressor wheel 165. In this manner, air filling efficiency in the cylinder 152 is enhanced.

Also, the turbocharger 160 of this embodiment is formed as a turbocharger of so-called a variable blade turbocharger and an exhaust gas path is formed along a rotational direction of the turbine wheel 161 so as to surround an outer periphery of the turbine wheel 161. Accordingly, an exhaust gas passes through the exhaust gas path and is blown toward an axis of the turbine wheel 161. The exhaust gas path is provided with a variable blade mechanism formed of a valve mechanism as supercharging pressure regulation means 167. An exhaust gas pass-through area in the exhaust gas path is changed with an opening and closing operation of the variable blade mechanism so that a flow velocity of the exhaust gas blown to the turbine wheel 161 is varied. Consequently, a rotational frequency of the turbine wheel 161 is regulated and an amount and a pressure (supercharging pressure) of air forced into the cylinder 152 are regulated.

It should be noted that the supercharging pressure regulation means 167 is not limited to the variable blade mechanism and can be formed of other means including, for example, a waste gate valve mechanism by which a flow velocity of the exhaust gas blown to the turbine wheel 161 can be changed using a waste gate valve.

### 2. ECU (Supercharging Pressure Control Processing Apparatus)

A specific configuration of the ECU 180 functioning as the supercharging pressure control processing apparatus of this embodiment will now be described.

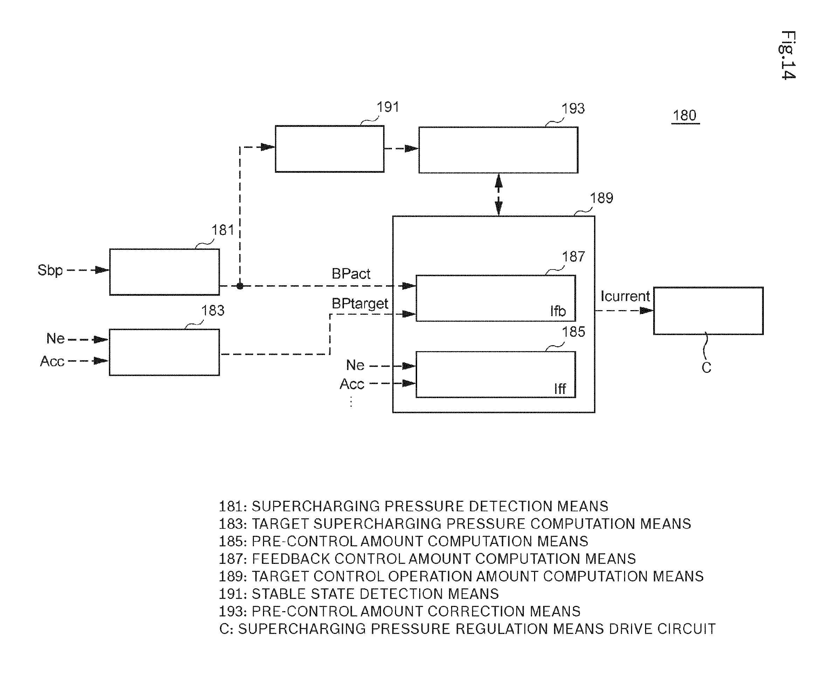

Fig. 14 shows a portion related to supercharging pressure control in the configuration of the ECU 180 by functional blocks. The ECU 180 is mainly formed of a known micro-computer and includes supercharging pressure detection means 181, target supercharging pressure computation means 183, target control operation amount computation means 189 formed of pre-control amount computation means 185 and feedback control amount computation means 187, stable state detection means 191, and pre-control amount correction means 193 as chief components. More specifically, the respective means are realized by running a program on the micro-computer.

As with the ECU 50 of the first embodiment above, the ECU 180 is provided with unillustrated memory devices, such as a RAM and a ROM, an unillustrated drive circuit that passes a current to the supercharging pressure regulation means 167, and the like. Also, detection signals of various sensors including a supercharging pressure sensor 157 provided to an intake manifold of the internal combustion engine 151 are inputted into the ECU 180.

The supercharging pressure detection means 181 forms the controlled state amount detection means of the invention and is configured so as to detect an actual supercharging pressure BPact on the basis of a detection signal Sbp of the supercharging pressure sensor 157.

The target supercharging pressure computation means 183 forms the target controlled state amount computation means of the invention and is configured so as to find a target supercharging pressure BPtarget using a supercharging pressure map on the basis of information on a running condition of the internal combustion engine 151, for example, the engine speed Ne and the accelerator pedal position Acc. The supercharging pressure map is a map showing a relation between the engine speed Ne and the accelerator pedal position Acc with respect to the target supercharging pressure BPtarget, and is preliminarily set on the basis experiments or the like.

The pre-control amount computation means 185 making up the target control operation amount computation means 189 is configured so as to find a pre-control amount (energization amount) Iff of the supercharging pressure regulation means 167 using a pre-control map on the basis of a running condition of the internal combustion engine 151 as a predetermined state amount, such as the engine speed Ne and the accelerator pedal position Acc. The pre-control map is determined by a simulation in consideration of a PID (Proportional-Integral-Derivative) constant in PID control described below and a variance of the supercharging pressure on the basis of the engine speed Ne, the accelerator pedal position Acc, and the like. It should be noted that each pre-control amount Iff is set to a value slightly less than an energization amount for the target opening obtained by the simulation. The reason why the pre-control amount Iff is set to a value slightly less than the energization amount for the target opening is because a shortage is compensated for by the PID control.

Also, the feedback control amount computation means 187 making up the target control operation amount computation means 189 is configured so as to calculate a feedback control amount (energization amount) Ifb of the supercharging pressure regulation means 167 by performing a PID (Proportional-Integral-Derivative) operation in such a manner that a deviation ΔBP between the target supercharging pressure BPtarget calculated in the target supercharging pressure computation means 183 and the actual supercharging pressure BPact detected by the supercharging pressure detection means 181 becomes zero.

Also, in the target control operation amount computation means 189, by adding the feedback control amount Ifb to the pre-control amount Iff, it becomes possible to obtain a target control operation amount Icurrent in which a supercharging pressure that becomes short with a value of the pre-control amount Iff alone is compensated for. It should be noted, however, that in the case of the ECU 180 of this embodiment, the target control operation amount Icurrent is found in a state where the pre-control amount is corrected by pre-control amount correction means 193 described below. The target control operation amount computation means 189 is configured so as to output an energization instruction to the drive circuit of the supercharging pressure regulation means on the basis of the calculated target control operation amount Icurrent.

The ECU 180 of this embodiment is configured so as to learn a correction amount of the pre-control amount, Iff_C, using the pre-control amount correction means 193 while a stable state of the supercharging pressure is detected by the stable state detection means 191.

The stable state detection means 191 is configured so as to determine whether the supercharging pressure is in a stable state or not. A specific configuration is not particularly limited and it can be configured in such a manner that a stable state is determined, for example, when a predetermined time or more has elapsed while the deviation of the supercharging pressure, ΔBP, is within a predetermined range. Besides this configuration, it can be also configured in such a manner that a stable state is determined when a predetermined time or more has elapsed while a difference between the last value and the current value of the actual supercharging pressure BPact or the target supercharging pressure BPtarget is equal to or smaller than a predetermined threshold value.

The pre-control amount correction means 193 is configured so as to maintain a ratio Rfb of the feedback control amount Ifb in a predetermined range by correcting the pre-control amount Iff in such a manner that a ratio Rff of the pre-control amount Iff to the current target control operation amount Icurrent coincides with a target ratio R1 while a stable state of the supercharging pressure is detected by the stable state detection means 191. While the supercharging pressure is in a stable state, the deviation of the supercharging pressure, ΔBP, changes in a stable manner. Hence, a fluctuation or a variance of the apparent efficiency of the supercharging pressure regulation means 167 is compensated for by the correction amount Iff_C found in this instance. A specific configuration of the pre-control amount correction means 193 can be the same as that of the pre-control amount correction means 69 of the first embodiment above and a detailed description is omitted herein.

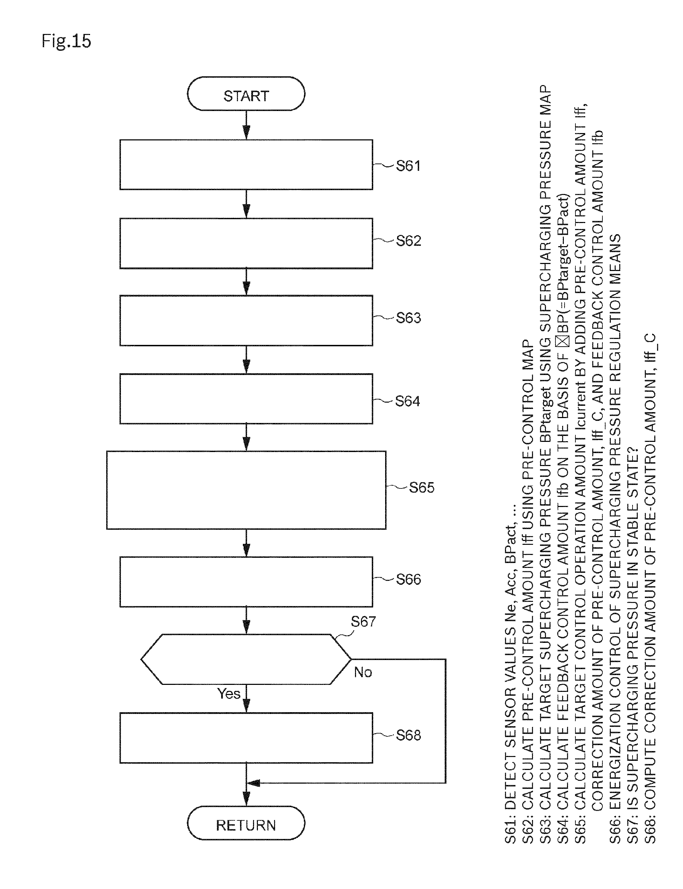

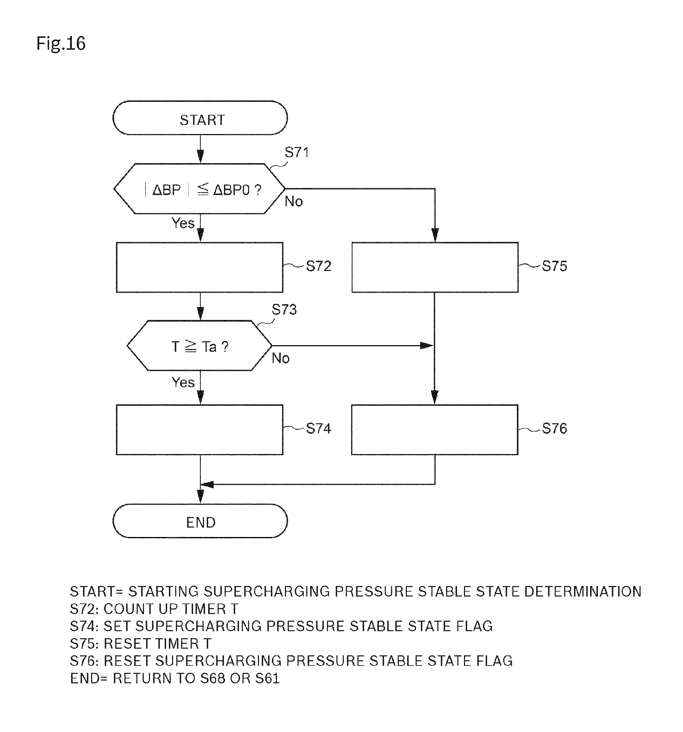

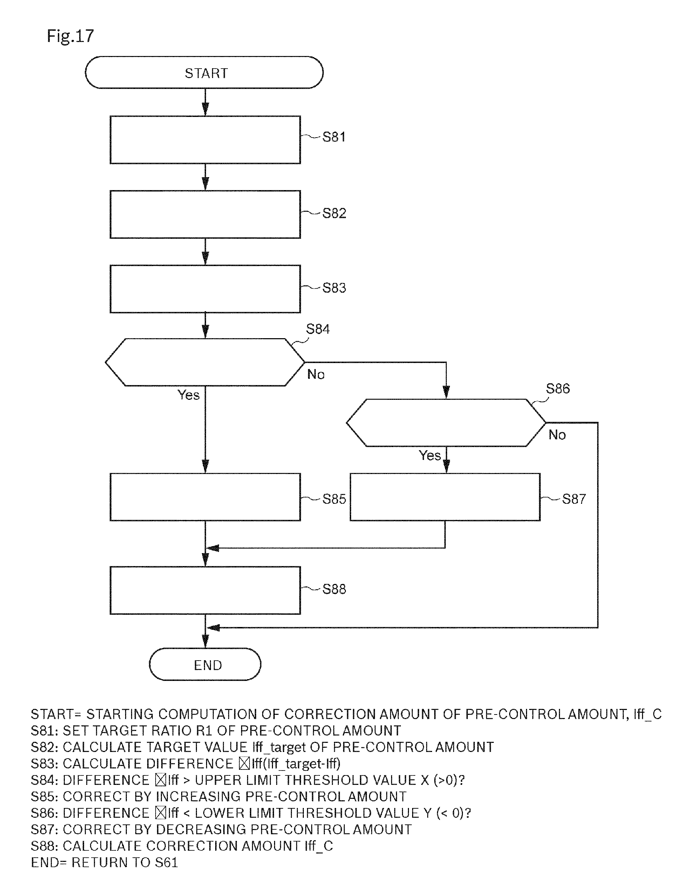

Fig. 15 through Fig. 17 are flowcharts depicting an example of a drive control method (supercharging pressure control method) of the supercharging pressure regulation means 167 performed by the ECU 180 of this embodiment. Basically, the drive control method of the supercharging pressure regulation means 167 depicted in the flowcharts of Fig. 15 through Fig. 17 can be carried out in accordance with the flowcharts of Fig. 5 through Fig. 7 of the first embodiment above. It should be noted, however, that Step S2 of computing the target fuel injection amount Q in the flowchart of Fig. 5 is omitted from the flowchart of Fig. 15. Also, because the energization amount Icurrent of the supercharging pressure regulation means 167 is found in Step S65, this flowchart is equivalent to the flowchart of Fig. 5 in which Step S7 is omitted.

According to the supercharging pressure control processing apparatus (ECU) 180 of this embodiment described above, not only the target control operation amount Icurrent of the supercharging pressure regulation means 167 to regulate a supercharging pressure is found on the basis of a sum of the pre-control amount Iff and the feedback control amount Ifb, but also a ratio under the charge of the feedback control is always maintained constant because the pre-control amount Iff is corrected according to a fluctuation or a variance of the apparent efficiency of the supercharging pressure regulation means 167 caused by an individual difference and deterioration with time of the respective constituent members forming the turbocharger 160. It thus becomes possible to perform control of a supercharging pressure in a stable manner while making responsivity of the supercharging pressure to the operation control of the supercharging pressure regulation means 167 satisfactory.

Also, according to the supercharging pressure control processing apparatus 180 of this embodiment, the correction amount of the pre-control amount, Iff_C, is calculated by a PID operation in such a manner that the ratio Rff of the pre-control amount Iff to the target control operation amount Icurrent of the supercharging pressure regulation means 167 coincides with the target ratio R1. It thus becomes possible to correct the pre-control amount Iff according to an actual fluctuation or variance of the apparent efficiency of the supercharging pressure regulation means 167. Hence, the supercharging pressure can be controlled in a more stable manner.

## Claims

1. A control processing apparatus of a control member configured so as to find a target control operation amount of the control member to control a predetermined controlled state amount to be a target controlled state amount on the basis of a sum of a feedback control amount and a pre-control amount, and having:
controlled state amount detection means for detecting the controlled state amount;
target controlled state amount computation means for computing the target controlled state amount;
feedback control amount computation means for computing the feedback control amount using a deviation between the target controlled state amount and the controlled state amount;
pre-control amount computation means for finding the pre-control amount corresponding to a predetermined state amount; and
target control operation amount computation means for finding the target control operation amount on the basis of the sum of the feedback control amount and the pre-control amount,
the control processing apparatus of a control member being **characterized by** including:
stable state detection means for detecting a stable state of the controlled state amount; and
pre-control amount correction means for correcting the pre-control amount in such a manner that a ratio of the feedback control amount to the sum in the stable state is maintained in a predetermined range.

2. The control processing apparatus of a control member according to claim 1, **characterized in that**:
the pre-control amount correction means calculates a correction amount of the pre-control amount on the basis of a deviation between an actual value of the ratio of the pre-control amount and a target value of the ratio when the stable state is detected.

3. The control processing apparatus of a control member according to claim 1, **characterized in that**:
the pre-control amount correction means increases or decreases the pre-control amount by a predetermined amount depending on a relation as to which one of an actual value of the ratio of the pre-control amount and a target value of the ratio is greater or smaller than the other.

4. The control processing apparatus of a control member according to any one of claims 1 through 3, **characterized by** including:
target ratio setting means for setting a target value of the ratio according to a predetermined state amount that is different at least from the controlled state amount.

5. The control processing apparatus of a control member according to any one of claims 1 through 4, **characterized in that**:
an initial value of the correction amount is set before shipment of the control processing apparatus of the control member on the basis of an individual difference of a system to which the control member is equipped.

6. A pressure control processing apparatus configured so as to find a target control operation amount of a metering valve to control a pressure of a common rail provided to an accumulator fuel injection control apparatus used for control of fuel injection into a cylinder of an internal combustion engine on the basis of a sum of a feedback control amount and a pre-control amount, **characterized by** including:
rail pressure detection means for detecting the pressure of the common rail;
target rail pressure computation means for computing a target value of the pressure of the common rail;
feedback control amount computation means for computing the feedback control amount using a deviation between the target value and the pressure of the common rail;
pre-control amount computation means for finding the pre-control amount corresponding to a running condition of the internal combustion engine;
target control operation amount computation means for finding the target control operation amount on the basis of the sum of the feedback control amount and the pre-control amount;
stable state detection means for detecting a stable state of the pressure of the common rail; and
pre-control amount correction means for correcting the pre-control amount in such a manner that a ratio of the feedback control amount to the sum in the stable state is maintained in a predetermined range.

7. An EGR control processing apparatus configured so as to find a target control operation amount of an EGR valve in an EGR apparatus that controls an EGR amount or an EGR rate of an internal combustion engine by returning a part of an exhaust gas of the internal combustion engine to an intake side on the basis of a sum of a feedback control amount and a pre-control amount, **characterized by** including:
EGR value detection means for detecting the EGR amount or the EGR rate;
target EGR value computation means for computing a target value of the EGR amount or the EGR rate;
feedback control amount computation means for computing the feedback control amount using a deviation between the target value and the EGR amount or the EGR rate;
pre-control amount computation means for finding the pre-control amount corresponding to a running condition of the internal combustion engine;
target control operation amount computation means for finding the target control operation amount on the basis of the sum of the feedback control amount and the pre-control amount;
stable state detection means for detecting a stable state of the EGR amount or the EGR rate; and
pre-control amount correction means for correcting the pre-control amount in such a manner that a ratio of the feedback control amount to the sum in the stable state is maintained in a predetermined range.

8. A supercharging pressure control processing apparatus configured so as to find a target control operation amount of supercharging pressure regulation means in a supercharger to control a supercharging pressure of an internal combustion engine on the basis of a sum of a feedback control amount and a pre-control amount, **characterized by** including:
supercharging pressure detection means for detecting the supercharging pressure;
target supercharging pressure computation means for computing a target value of the supercharging pressure;
feedback control amount computation means for computing the feedback control amount using a deviation between the target value and the supercharging pressure;
pre-control amount computation means for finding the pre-control amount corresponding to a running condition of the internal combustion engine;
target control operation amount computation means for finding the target control operation amount on the basis of the sum of the feedback control amount and the pre-control amount;
stable state detection means for detecting a stable state of the internal combustion engine; and
pre-control amount correction means for correcting the pre-control amount in such a manner that a ratio of the feedback control amount to the sum in the stable state is maintained in a predetermined range.
